# EUROPEAN PATENT APPLICATION

(11) **EP 1 747 740 A1**
(43) Date of publication of application: **31.01.2007**
(21) Application number: 06253886.3
(22) Date of filing: 25.07.2006
(51) Int. Cl.: A47J 31/057, A47J 31/46, A47J 31/50

(54) **Beverage maker**

(30) Priority: 25.07.2005 JP 2005214721; 12.05.2006 JP 2006133666
(71) Applicant: IZUMI PRODUCTS COMPANY, Matsumoto, Nagano (JP)
(72) Inventor: Takizawa, Hiroyuki, Matsumoto Nagano (JP); Furuhata, Shinichi, Matsumoto Nagano (JP); Kashiwabara, Shuhei, Matsumoto Nagano (JP); Shimizu, Tetsuhiko, Matsumoto Nagano (JP); Kaneko, Hiroaki, Matsumoto Nagano (JP); Ohno, Hiroki, Matsumoto Nagano (JP); Izumi, Yukio, Matsumoto Nagano (JP); Uchiyama, Hiromi, Matsumoto Nagano (JP); Wanikawa, Hiroaki, Matsumoto Nagano (JP)
(74) Representative: Jenkins, Peter David

(57) **Abstract**

A beverage maker including: a scatter (70) and an ice beverage extraction funnel (50) that are selectively held in a main body unit (10) in a rotatable manner; a hot beverage extraction funnel (76) held in the main body unit (10) in the hot beverage extraction mode for receiving hot water dripped by the scatter (70); a cooling liquid reservoir (52B) held in the main body unit (10) in the ice beverage extraction mode for cooling an extract liquid collector unit (52A) that receives hot extract liquid from the ice beverage extraction funnel (50) and for cooling the extract liquid; and rotatable stirring members (50A) and (50B) extending into at least one or other of the extract liquid collector unit (52A) and cooling liquid reservoir (52B).

## Description

### BACKGROUND OF THE INVENTION

### 1. Field of the Invention

The present invention relates to a beverage maker capable of selecting between a hot beverage extraction mode, which is for extracting a hot beverage such as hot coffee using coffee powder or the like, and an ice beverage extraction mode, which is for cooling an extracted hot beverage with a cooling liquid.

### 2. Description of the Related Art

Coffee makers, which use so-called regular coffee, of a drip type in which hot water at high temperature is poured into a coffee funnel into which coffee powder has been placed, the coffee is extracted, and the dripped coffee liquid is collected, such as a drip type that uses a paper filter, for example, are commonly known. Iced coffee extraction methods for cooling coffee (hot coffee liquid) extracted in that way with ice are also commonly known.

Japanese Patent Application Laid-Open (Kokai) No. S61-179115 and Japanese Utility Model Application Laid-Open (Kokai) No. S59-7732 disclose coffee makers in which hot water at high temperature resulting from heating water of a water reservoir with a heater is poured into a chamber (coffee filter) into which coffee powder has been placed, and the coffee liquid at high temperature which drips from the chamber is passed through the interior of an ice chamber wherein ice has been placed and collected in a decanter placed underneath. In other words, these coffee makers cool high-temperature coffee liquid by pouring it over ice.

Japanese Patent Application Laid-Open (Kokai) 2005-143702 discloses a coffee maker makes it possible to select between a hot coffee extraction mode and an iced coffee extraction mode. In the iced coffee extraction mode, the extracted hot coffee liquid is received in a coffee liquid receptacle, and this is made into iced coffee by cooling with ice water from the exterior of that coffee liquid receptacle. In this case, a cooling unit is used which surrounds the outer circumference of the coffee liquid receptacle with an ice water reservoir, and the coffee liquid is made to flow down into a jug by opening a discharge valve provided at the bottom of the coffee liquid receptacle.

Japanese Patent Application Laid-Open (Kokai) 2005-143702 further discloses a coffee maker in which a coffee funnel is detachably provided on the lower surface of the top housing of the main body unit, and this coffee funnel is rotationally driven, so that coffee is extracted while rotating the coffee funnel. The coffee funnel in Japanese Patent Application Laid-Open (Kokai) 2005-143702 is used both in the iced coffee extraction mode and in the hot coffee extraction mode. As a result, in the hot coffee extraction mode, the hot coffee is received into the coffee liquid receptacle without placing ice in the ice water reservoir, and made to flow down into a jug.

In the coffee makers of Japanese Patent Application Laid-Open (Kokai) No. S61-179115 and Japanese Utility Model Application Laid-Open (Kokai) No. S59-7732, the high-temperature coffee liquid is cooled by bringing it directly into contact with ice; accordingly, the cooled coffee liquid will be weakened by the melt water from the ice. As a result, the flavor of the iced coffee will deteriorate, and the taste and odor of the ice will remain in the coffee liquid, which are problems.

On the other hand, the coffee maker of Japanese Patent Application Laid-Open (Kokai) 2005-143702 is not a type of coffee maker that pours extracted coffee liquid directly over ice in the ice beverage extraction mode; accordingly, the coffee is never weakened by melted water from ice. However, in the hot beverage extraction mode, because coffee liquid dripped from the coffee extraction funnel is made to flow down into the jug after being collected in the coffee liquid receptacle of the cooling unit, the coffee readily cools even if ice water is not placed in the ice water reservoir, which is a problem.

It is also known that, during coffee extraction, in particular, the way the hot water that is poured in the coffee funnel is poured greatly affects smell, taste, and flavor. As a result, one of the great delights of a coffee lover is to conduct the extraction while verifying how foam is being generated in the coffee funnel during hot coffee extraction. Accordingly, it is desirable, for instance, to be able to verify the situation inside the coffee funnel at such times and to be able to suitably set the way the hot water is poured. Since the smell is not as strong with iced coffee as with hot coffee, such hot water pouring ways are not regarded to be all that important.

### BRIEF SUMMARY OF THE INVENTION

According, it is an object of the present invention, which was devised in view of such circumstances as described above, to provide a beverage maker in which in the ice beverage extraction mode, richly flavorful and delicious ice beverages such as iced coffee can easily be made, without making the ice beverages weakened by melted water from ice; in hot beverage extraction mode for hot coffee or the like, hot beverages do not readily cool; and in addition, delight can be experienced in making the way the hot water poured into the extraction funnel suitable and verifying the situation inside the extraction funnel.

The above object is accomplished by a unique structure of the present invention for a beverage maker in which switching is possible between a hot beverage extraction mode and an ice beverage extraction mode for cooling a hot extract liquid with a cooling liquid; and in the present invention, the beverage maker includes:
a main body unit provided in its upper part with a hot water pour-out port;
a scatter and an ice beverage extraction funnel selectively held in the main body unit;
a rotational drive unit provided in the main body unit, the rotational drive unit rotationally driving the scatter or the ice beverage extraction funnel, which are selectively held in the main body unit, about a vertical rotational center axis;
a hot beverage extraction funnel held in the main body unit in the hot beverage extraction mode, the hot beverage extraction funnel receiving hot water which is received, from the hot water pour-out port, dispersed, and dripped by the scatter;
a cooling liquid reservoir held in the main body unit in the ice beverage extraction mode, the cooling liquid reservoir cooling the extract liquid collector unit, which is for receiving hot extract liquid below the ice beverage extraction funnel, and the extract liquid in the extract liquid collector unit; and
a stirring member which extends into at least one of the extract liquid collector unit and the cooling liquid reservoir and is driven by the rotational drive unit; and further
in the hot beverage extraction mode, hot extract liquid is received by a vessel from the hot beverage extraction funnel, and
in the ice beverage extraction mode, ice beverage liquid cooled by the cooling liquid reservoir is transferred to a vessel from the extract liquid collector unit.

As seen from the above, in the present invention, the scatter and the ice beverage extraction funnel are made such that they can be selectively held. In the hot beverage extraction mode, the scatter is turned, the hot beverage extraction funnel is held in the main body unit, and the hot beverage dripped from that funnel is received into another vessel, such, for example, as a cup or jug placed on the bottom part of the main body unit. As a result the hot water inside the funnel can be poured substantially uniformly overall, with a suitable manner of pouring, by the rotating scatter, and highly aromatic and tasty hot beverages can be extracted. In addition, because there is a gap between the funnel and the scatter, which is visible from the outside, the situation inside the funnel can be seen from the outside, enhancing the delight of the operator. Furthermore, since the extract liquid dripped from the funnel enters directly into a vessel (a cup or the like) or jug, the extract liquid does not readily cool.

On the other hand, in the ice beverage extraction mode, the ice beverage extraction funnel is rotated, and the extract liquid collector unit held in the main body unit below the funnel is cooled by the cooling liquid reservoir. A cooling liquid cooled beforehand in a refrigerator or the like is placed in the cooling liquid reservoir at that time. Since the funnel is rotating, the hot water is dispersed, poured, and substantially uniformly in the funnel. Also, a hot extract liquid dripped from the funnel collects in the extract liquid collector unit, and is cooled by the cooling liquid in the cooling liquid reservoir; accordingly, the extract liquid is cooled without being weakened by ice water.

In the present invention, at least one or the other of the extract liquid collector unit and cooling liquid reservoir is stirred by a stirring vane, so that the cooling effect is enhanced. Since the stirring vane is driven by the rotational drive unit of the scatter, the rotational drive unit can be commonly used; and this simplifies the construction of the beverage maker. The ice beverage collected in the extract liquid collector unit can be made to flow down from the extract liquid collector unit into a vessel (a cup or the like) or jug placed therebelow. Since this ice extract liquid is not weakened by ice water, a richly flavorful and delicious ice beverage can be made.

It is preferable in the present invention that the rotational drive unit rotate the scatter or the ice beverage extraction funnel in a fixed direction about a vertical axis as the center, but the rotational drive unit can be one that makes reverse rotation at certain time intervals or make reverse rotation after a certain amount of rotation (either one turn or greater, or one turn or less).

The scatter and the ice beverage extraction funnel can be made so that they can be selectively secured to a vertical and downward oriented drive shaft provided in the main body unit of the beverage maker, and so that the drive shaft is rotationally driven by the rotational drive unit. The scatter and the ice beverage extraction funnel can be made so that they can be directly engaged to the drive shaft, or so that they can be attached detachably thereto, or, alternatively, a connecting member can be interposed.

In the present invention, a hot water receptacle is preferably used as the connecting member. In other words, a hot water receptacle is made detachable with respect to the drive shaft with a chuck or the like, and the scatter or ice beverage extraction funnel is exchangeably mounted to the hot water receptacle. The scatter, funnel, or hot water receptacle can be engaged to the drive shaft so that the rotation can be transmitted, and prevention of disengagement from the drive shaft can be effected by other means.

The hot water receptacle receives hot water supplied from the upper part of the main body unit and conducts the hot water, in a dispersing manner, to the scatter or the ice beverage extraction funnel. Accordingly, the hot water drip hole is preferably provided at a position that is offset from the rotational center axis. For example, with a substantially inverted umbrella shape, a plurality of hot water drip holes can be provided at positions of differing distances from the rotational center axis, and, by suitably setting the drip hole positions and hole diameters, the hot water dispersion conditions can be varied.

The extract liquid collector unit and the cooling liquid reservoir can be integrated to form a cooling unit, and further this cooling unit can be made so as to be held in the main body unit. In this case, the cooling liquid in the cooling liquid reservoir contacts the extract liquid collector unit from the outside (from the outer circumference) and cools the extract liquid therein.

In the present invention, the cooling unit includes the extract liquid collector unit and the cooling liquid reservoir for cooling the extract liquid collector unit from the outside (from the outer circumference); and in this structure, the extract liquid collector unit can be made in the shape of a bottomed cylinder, and the cooling liquid reservoir can be made concentrically circular, surrounding the outside thereof in a ring shape. In this structure, a stirring vane or vanes can be secured to the lower surface of the ice beverage extraction funnel, extending downward from above into at least one or other of the extract liquid collector unit and the cooling liquid reservoir.

Furthermore, in the present invention, an ice beverage discharge valve can be provided in the bottom of the extract liquid collector unit. It is preferable that the discharge valve be opened and closed by manipulating (pressing or rotation, etc.), from the outside, an operating piece provided in the vicinity of the outer circumferential surface of the cooling unit. This is for the purpose of preventing the discharge valve from being mistakenly opened.

It is further preferable in the present invention that the scatter is provided with drip holes at a plurality of positions of differing depths, with the drip holes at deep (deeper) positions provided near the rotational center axis, and the drip holes at shallow (shallower) positions provided apart from the rotational center axis. With this structure, a time differential can be effected in the hot water pour-in positions, so that hot water is initially poured in the vicinity of the turning center and then, after a delay, at positions apart from the turning center. Thus, it is possible to pour hot water into the funnel while suitably distributing it.

The above-described scatter can be made so that the bottom surface is formed by an inclined surface that is deeper near the turning center but becomes shallower toward the periphery and so that the drip holes are formed at differing bottom surface heights and at positions of differing distance from the rotational center axis. It is further possible in the present invention that the volume of powder constituting the extraction raw material, such as coffee powder or the like, and the extraction time are interrelated, so that hot water is not dripped where there is no extraction raw material powder in the funnel.

In the bottom surface of the scatter of the present invention, a deep portion (deeper concavity) and a shallow portion (shallower concavity) are formed, so that the bottoms of the concavities can be made to be substantially stair shaped, and hot water drip holes can be provided, in the bottoms of the concavities, respectively, the radial positions from the turning center of the drive shaft mutually differ. In this structure, it is preferable that the positions of the deep concavity and of the shallow concavity, respectively, be determined so that the former is close to the turning center of the drive shaft and the latter becomes apart from the turning center of the drive shaft, thus forming the drip hole or holes in the deep concavity nearer to the turning center of the drive shaft than the drip hole or holes of the shallow concavity. With this structure, the manner of pouring will be regulated so that hot water will first be poured in the vicinity of the center of the funnel, and then, after a delay of a certain time, poured in the vicinity of the periphery of the funnel, thus making it possible to effect optimum manner of pouring.

Drip holes can be provided, one each, at a deep position and at a shallow position, respectively, in the present invention. In this case, the diameter of the drip hole at the deep position is made smaller than the hole diameter at the shallow position. When hot water collects at the deep position and at the shallow position, since the liquid surface of the hot water is common, a differential will develop in the liquid pressure acting on the drip holes at the deep position and at the shallow position. The above structure (making the size of the drip holes different) prevents the drip volume from the drip hole at the shallow position from becoming markedly smaller.

It is further preferable in the present invention that, in the ice beverage extraction funnel, stirring vanes be provided so as to extend, respectively, into the insides of both the extract liquid collector unit and cooling liquid reservoir, that the number of stirring vanes extending into the inside of the cooling liquid reservoir be three or more, and that the lower ends thereof be positioned below the lower ends of the stirring vanes extending into the inside of the coffee liquid collector unit. With this structure, when the ice beverage extraction funnel is set on a table, the lower ends of the stirring vanes for the cooling liquid reservoir come into contact with the table, and the lower ends of the stirring vanes for the extract liquid collector unit will be elevated or floated, separated from the table. As a result, the stirring vanes that are immersed in the extract liquid are prevented from being soiled.

In the present invention, in the bottom of the hot beverage extraction funnel, a discharge valve capable of being opened from below, is preferably provided; and, in the cover plate for the vessel (jug, for example) that receives the hot beverage from the funnel, a convexity is preferably provided so as to open the discharge valve when the vessel is placed in the bottom part of the main body unit. In this case, the discharge valve of the funnel closes when the vessel is pulled out, so that extract liquid is prevented from dripping from the funnel.

The hot beverage extraction funnel can be made so as to be locked in the main body unit; and in this structure, when the convexity in the cover plate of the vessel opens the funnel discharge valve, the funnel is stabilized, not floating upward or moving or the like.

The beverage maker of the present invention can be designed so that it includes an electric heater, a control section, and input means for inputting command on the extraction process volumes (how many portions are to be extracted); and in this structure, the control section controls the hot water output volume by changing the heater heating time that corresponds to the extraction process volume. The heater temperature can be made constant and only the heating time be varied, or the hot water output volume can be changed for hot and for ice.

Ice is often added to an ice beverage; and thus in the present invention, it is possible to extract more strongly by making the hot water output speed during ice beverage extraction slower than during hot beverage extraction. In this case, the hot water output speed (hot water flow-out speed) can be lowered by lowering the heater temperature. One water reservoir can be held in the upright part of the main body unit, and the control section can effect control so that volumes of hot water that are optimum for hot and ice extraction respectively are delivered, according to the heater temperature and heating time.

In the above-described structure, the water reservoir can be made so that its lower part, oriented substantially vertically downward, is engaged into and held in a concavity provided in the lower part of a water reservoir loading chamber on the side of the main body unit. In this case, in the water reservoir and the water reservoir loading chamber, steps can be formed, respectively, that butt against each other when the water reservoir is moved vertically upward a certain distance, so that the water reservoir can be removed, when the steps are butted against each other, by tilting the upper part of the water reservoir so as to pull it from the water reservoir loading chamber toward the outside.

With this structure, the shock occurring when the lower part of the water reservoir is extracted from the concavity in the water reservoir loading chamber is absorbed by the steps impacting against each other, and it is possible to prevent the water reservoir from moving excessively contrary to what is wished and the water remaining inside from splashing out to the periphery.

In the present invention, the ice beverage extraction funnel can be used as the hot beverage extraction funnel. When the funnel is used for ice beverage extraction, and stirring vanes are used therefor, then such stirring vanes are preferably made detachable with respect to the funnel.

Furthermore, when a discharge valve for the extract liquid is provided in the bottom of the funnel, the discharge valve must be opened upon extraction of an ice beverage. Accordingly, it can be designed so that the discharge valve is automatically opened when the stirring vanes is attached to the funnel.

### BRIEF DESCRIPTION OF THE SEVERAL VIEWS OF THE DRAWINGS

Figure 1 is a cross-sectional side view of the iced coffee extraction mode of the coffee maker of one embodiment of the present invention;
Figure 2 is a rear elevational view of the coffee maker of Figure 1;
Figure 3 is a top view of the coffee maker of Figure 1;
Figure 4 is a cross-sectional side view of the hot coffee extraction mode of the coffee maker of Figure 1;
Figure 5 is an exploded perspective view of the parts of the main body unit of the coffee maker of Figure 1;
Figures 6, 7, and 8 are exploded perspective views of the parts of the coffee maker of Figure 1;
Figure 9 is an overall conceptual illustration of the coffee maker of Figure 1;
Figure 10 is an enlarged cross-sectional view of the vicinity of the chuck of a drive axis of the coffee maker of Figure 1;
Figure 11 shows the cross-section of the scatter of the coffee maker of Figure 1;
Figure 12 is a side view of the coffee maker in the ice beverage extraction mode in another embodiment of the present invention;
Figure 13 is side view in the hot beverage extraction mode of the coffee maker of Figure 12; and
Figure 14A and 14B are cross-sectional side views of the stirring vane attachment structure used in the second embodiment of the coffee maker of Figure 12.

### DETAILED DESCRIPTION OF THE INVENTION

### First embodiment

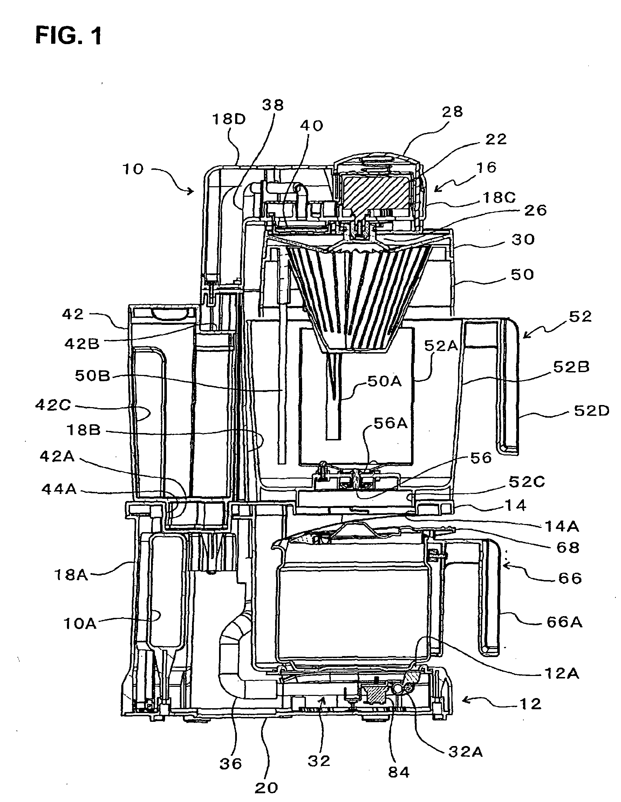

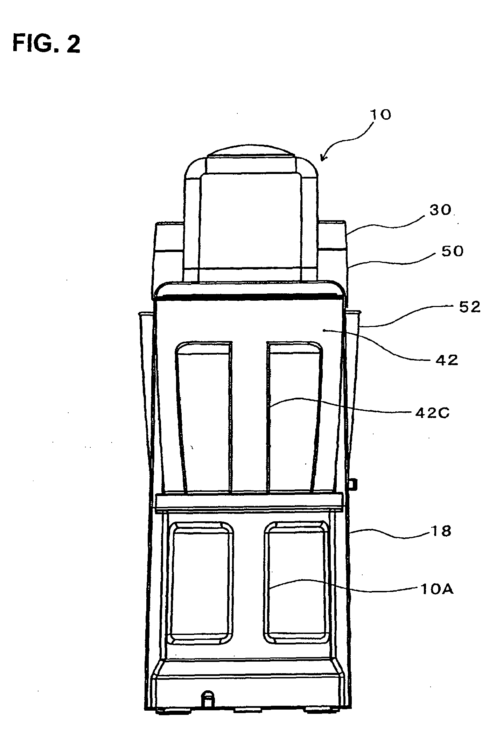

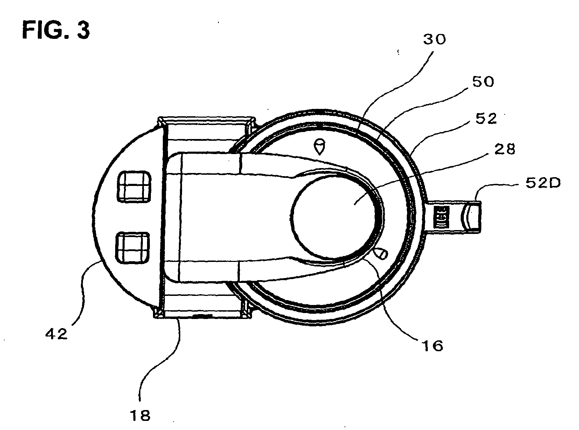

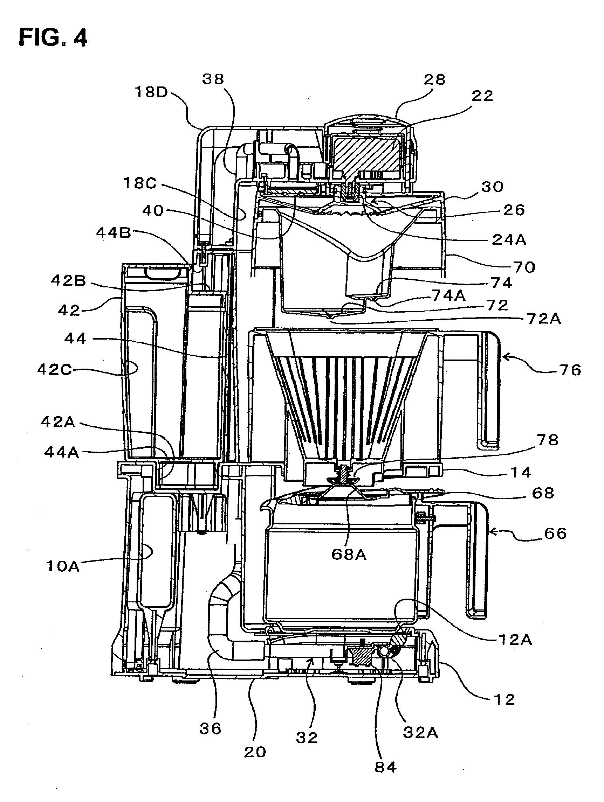

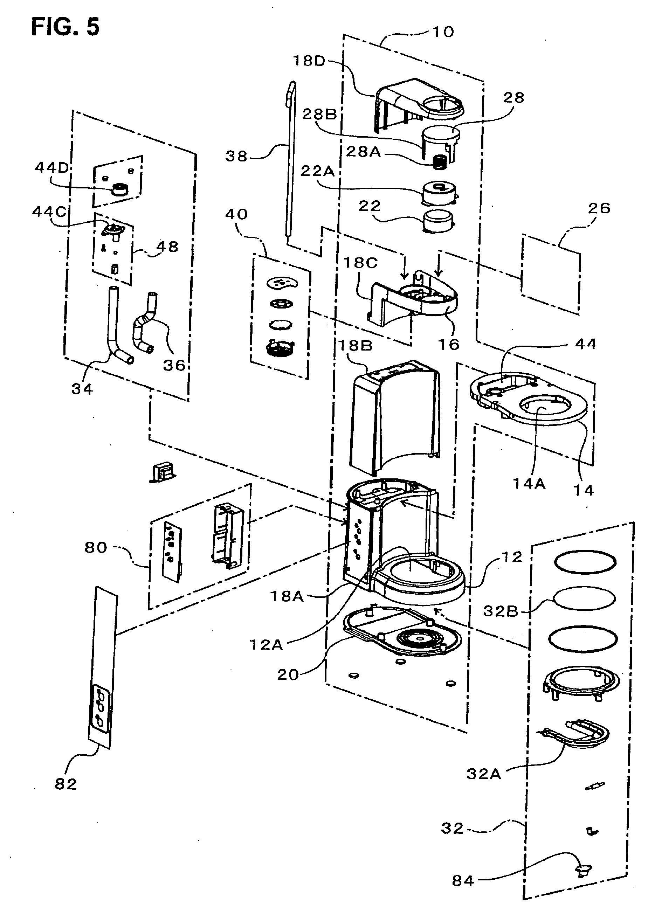

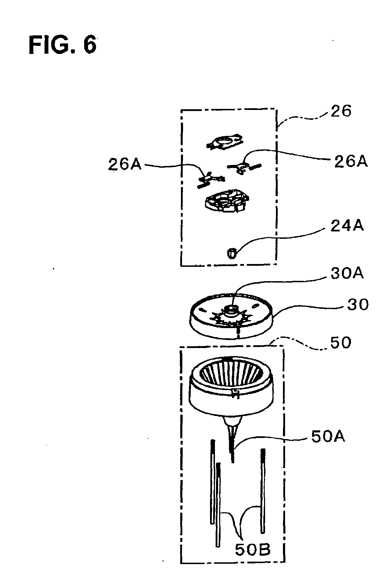

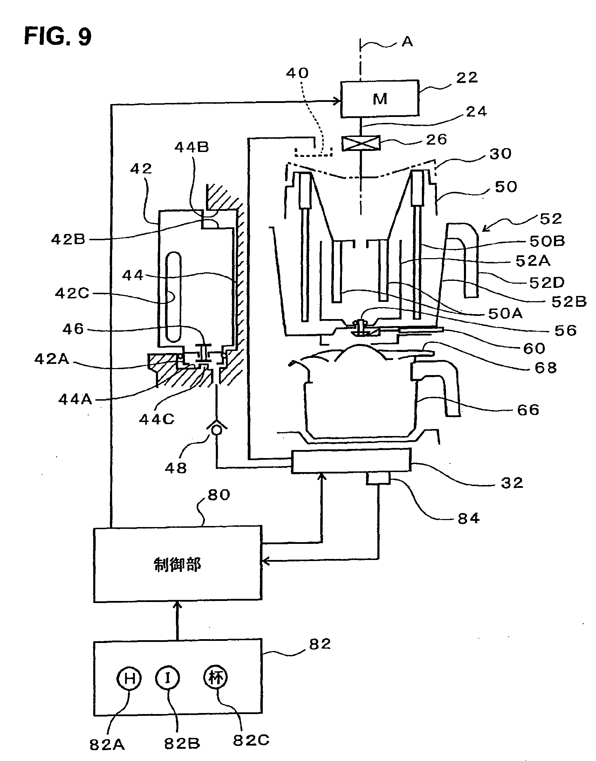

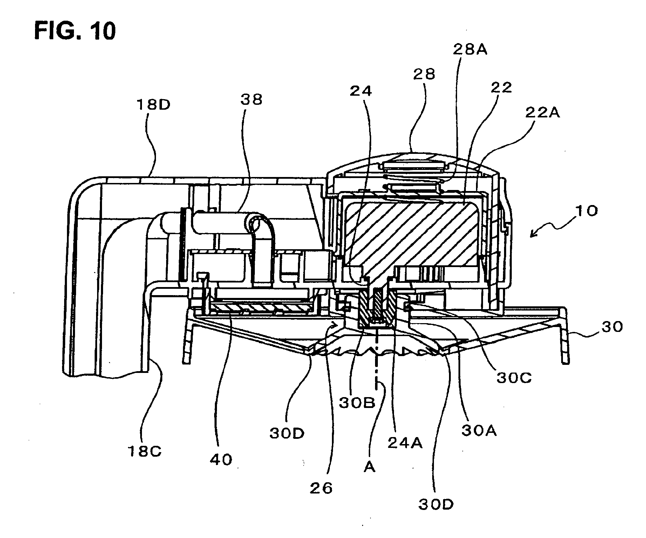

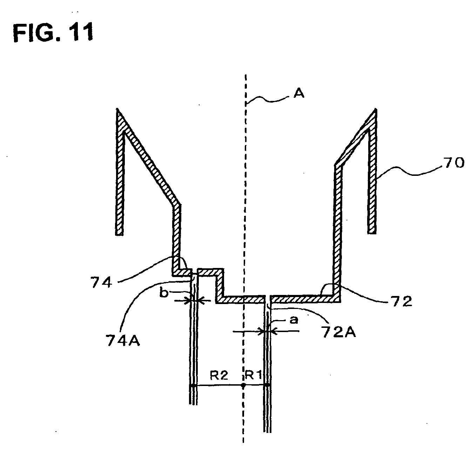

Figure 1 is a cross-sectional side view of the iced coffee extraction mode of the coffee maker of one embodiment of the present invention, Figure 2 is a rear elevational view thereof, and Figure 3 is a top view thereof. Figure 4 is a cross-sectional side view of the hot coffee extraction mode of the coffee maker. Figure 5 is an exploded perspective view of the parts of the main body unit of the coffee maker, Figures 6, 7, and 8 are exploded perspective views of the parts thereof, Figure 9 is an overall conceptual illustration, Figure 10 is an enlarged cross-sectional view of the vicinity of the chuck of a drive axis, and Figure 11 shows the cross-section of the scatter.

In these Figures, the reference numeral 10 is the main body of the coffee maker that includes a base housing 12, a partition member 14, and a top housing 16 which are joined by a vertical stand 18. The vertical stand 18, moreover, as shown in Figure 5, is comprised of a lower case 18A, middle case 18B, and upper case 18C stacked and joined in the vertical direction. The base housing 12 is formed integrally in the lower case 18A, and a bottom plate 20 (see Figure 5) is secured to the bottom of the base housing 12.

One end of the partition member 14 is held sandwiched between the joining surfaces of the lower case 18A and the middle case 18B, while the other end of the partition member 14 extends out above the base housing 12.

The upper case 18C is formed so that one end thereof is secured to the upper surface of the middle case 18B, while the other end forms the top housing 16 that extends out above the partition member 14. The upper case 18C is covered from above by an upper case cover 18D, and between the upper case 18C and the upper case cover 18D, a reduced-speed motor 22, which is a rotation drive unit, is provided.

The reduced-speed motor 22 has speed reduction gears (not shown in the drawings) inside, and the drive shaft 24 (see Figures 9 and 10), which is the output shaft of the reduced-speed motor 22, rotates at low speed about a vertical rotational center axis A. To this drive shaft 24, a hot water receptacle 30, described later, is mounted by a chuck 26 (see Figure 6), so that the hot water receptacle 30 is detachable with respect to the drive shaft 24. The chuck 26 is opened and closed by an attachment/detachment button 28 that is provided in the upper surface of the top housing 16. In other words, the reduced-speed motor 22 is circular, as viewed from above (see Figure 5), and the lid-shaped attachment/detachment button 28 surrounds the upper part of the motor cover 22A in which the reduced-speed motor 22 is provided.

The attachment/detachment button 28 returns upward by a coil spring 28A, and a plurality of projections 28B (see Figure 5) extending downward through the outside of the motor cover 22A are engaged with engagement pawls 26A and 26A of the chuck 26. When the attachment/detachment button 28 is pushed down, the projections 28B open the chuck 26 by opening the engagement pawls 26A and 26A to the outside (that is, they release the hot water receptacle 30). Furthermore, a hexagonal column-shaped bushing 24A is secured to the lower end of the drive shaft 24, while a hexagonal hole 30B (see Figure 10) into which the bushing 24A engages is formed in a hub unit 30A of the hot water receptacle 30. A ring-shaped channel 30C is formed in the outer circumference of that hub unit 30A. With this ring-shaped channel 30C, the semicircular arch-shaped tips of the engagement pawls 26A and 26A are engaged and disengaged.

In the base housing 12 of the main body unit 10, an electric heater 32 is provided. The electric heater 32 heats water conducted from a water reservoir 42, described later, through a water hose 34 (see Figure 5) and makes high-temperature (boiled) hot water which is sent by a hot water hose 36 and hot water pipe 38 provided inside the vertical stand 18 to the top housing 16. The hot water (boiling water) is conducted, through an activated charcoal filter 40 provided adjacent to the drive shaft 24 in the lower surface of the top housing 16, to the above-described hot water receptacle 30.

As is clear from Figure 10, the lateral cross-section of the hot water receptacle 30 is substantially umbrella-shaped (or a substantially inverted umbrella-shaped). In the upper surface of the hot water receptacle 30, a plurality of ribs are formed in the radial direction; and hot water drip holes 30D are formed between the ribs. By suitably setting the distance from the hub unit 30A or the drip holes 30D or by varying the distance for each of the drip holes 30D, the position of the hot water drip relative to an iced coffee extraction funnel 50, described later, attached to the hot water receptacle 30 can be changed.

The heater 32 has (see Figure 5) a heating element 32A bent in substantially a U-shape around a metal pipe, and a circular metal plate 32B is attached to the upper surface of heating element 32A. The metal plate 32B is fitted from below into the circular opening 12A provided in the base housing 12. On the metal plate 32B that faces the opening 12A, a jug 66, described later, is placed; and, in the hot coffee extraction mode, the jug 66 is kept warm.

The water reservoir 42 will be described.

The water reservoir 42 is, as shown in Figures 1 and 4, mounted on the outer surface of the middle case 18B in the main body unit 10. In other words, as seen from Figure 3, the vertical stand 18 has a substantially semicircular shape, as viewed from above, and the water reservoir 42 is shaped so that the horizontal cross-section thereof divides a part of the column vertically, so that the circular arc-shaped outer surface thereof follows, substantially smoothly, the outer surface of the vertical stand 18.

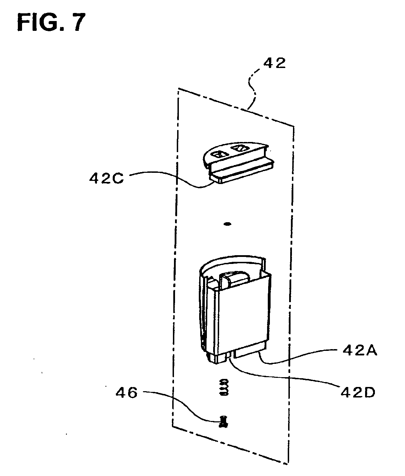

The water reservoir 42 is mounted in a water reservoir mounting chamber 44 that opens outwardly and is provided in the middle case 18B. In the partition member 14 (see Figure 4) that forms the bottom of this water reservoir mounting chamber 44, a concavity 44A, substantially trapezoidal as seen from above, is formed (see Figures 5 and 9); and in the bottom of the water reservoir 42, a convexity 42A, capable of engaging the concavity 44A substantially vertically from above, is formed (see Figure 7). In the upper surface of the water reservoir 42, moreover, a step 42B is formed on the inside (on the inmost side of the water reservoir mounting chamber 44), and the outside of the upper surface of the water reservoir 42 bulges out to the outside of the water reservoir mounting chamber 44. The upper surface of the water reservoir 42 is provided with a cover 42C (see Figure 7).

In the water reservoir mounting chamber 44, a step 44B is formed above the step 42B on the water reservoir 42 side so as to be separated by a certain distance, specifically by a distance slightly larger than the depth of the concavity 44A. Accordingly, when the water reservoir 42 is pulled upward from the mounted condition shown in Figures 1 and 4, the step 42B strikes (comes into contact) the step 44B in the mounting chamber 44 from below; as a result, the upward movement thereof is limited. If, in this condition, the step 42B is released from the step 44B by way of tilting the top of the water reservoir mounting chamber 44 outward, then the water reservoir 42 can be pulled diagonally upward while causing the convexity 42A in the bottom to bulge out from the concavity 44A.

In the outer surface of the water reservoir 42 that is of a circular arc shape, as seen from above, a handle 42C is provided. In the lower case 18A, a handle 10A is provided so as to be positioned below the water reservoir 42.

In the convexity 42A which is in the bottom of the water reservoir 42, a water discharge valve 46 is provided (see Figures 7 and 9). This water discharge valve 46 is in a downwardly moved position by a coil spring so as to close the water discharge path; and when the water reservoir 42 is loaded in the water reservoir mounting chamber 44, the water discharge valve 46 is pushed upward by a projection 44C provided in the concavity 44A, thus opening the water discharge path. The opposing surfaces of the convexity 42A and concavity 44A are tightly sealed; accordingly, water from the water reservoir 42 will flow out only in a volume that will fill the inside of the concavity 44A and will never flow out to the outside of the concavity 44A.

In actuality, moreover, a tube 44D (see Figure 5), surrounding the projection 44C and opening upward, is formed in the water reservoir mounting chamber 44, in the bottom of the water reservoir 42, a tube 42D (see Figure 7) that engages that tube, on the inner diameter side thereof, is formed, and the engaging circumferential surfaces of the two tubes 44D and 42D are tightly sealed. Accordingly, when the water discharge valve 46 opens, the interior of a small void surrounded by the tubes 44D and 42D is filled with water.

As seen from Figure 5, to the bottom of the small void surrounded by the tubes 44D and 42D, the above-described water hose 34 is connected through a check valve 48. As a result, when water from the water reservoir 42 is conducted through the water discharge valve 46, check valve 48, and water pipe 34, into the heater 32 and heated to boiling by the heater 32, then it flows out through the hot water hose 36, hot water pipe 38, and filter 40 into the hot water receptacle 30. At such time, because of the presence of the check valve 48, the boiling water will not flow backward to the water reservoir 42. When the water level inside the heater 32 drops, water is supplied from the water reservoir 42, and the above action is continued.

The iced coffee extraction mode (iced beverage extraction mode) will be described below.

In this iced coffee extraction mode, as seen from Figure 1, an iced coffee extraction funnel 50 is attached to the hot water receptacle 30, and a cooling unit 52 is mounted on the partition member 14. The iced coffee extraction funnel 50, as shown in Figures 1 and 9, has a circular upper edge that is folded back to the outside, and the outer circumference thereof is engageable with the hot water receptacle 30. A joining structure can be effected, for example, such that, in the outer circumference of the upper edge of the funnel 50, a channel bent into a hook shape is formed so that the upper end thereof opens at the upper edge, and a projection that engages the hook-shaped channel is formed on the inner surface of the outer circumferential part of the hot water receptacle 30, so that, when the funnel 50 is pushed in and upward relative to the hot water receptacle 30 while causing the upper end portion of the hook-shaped channel to engage the projection, the projection will be caused, by slightly rotating the funnel 50, to engage in the interior (horizontal portion) of the hook-shaped channel.

As seen from Figures 6 and 9, in the bottom of the funnel 50 are secured with two vanes (stirring vanes) 50A for stirring the coffee liquid; and, from the vicinity of the upper edge of the funnel 50, three stirring rods 50B that constitute vanes for stirring ice water are secured. These stirring vanes 50A and stirring rods 50B extend vertically downward. The radius of rotation of the stirring vanes 50A is set to be smaller than the radius of rotation of the stirring rods 50B.

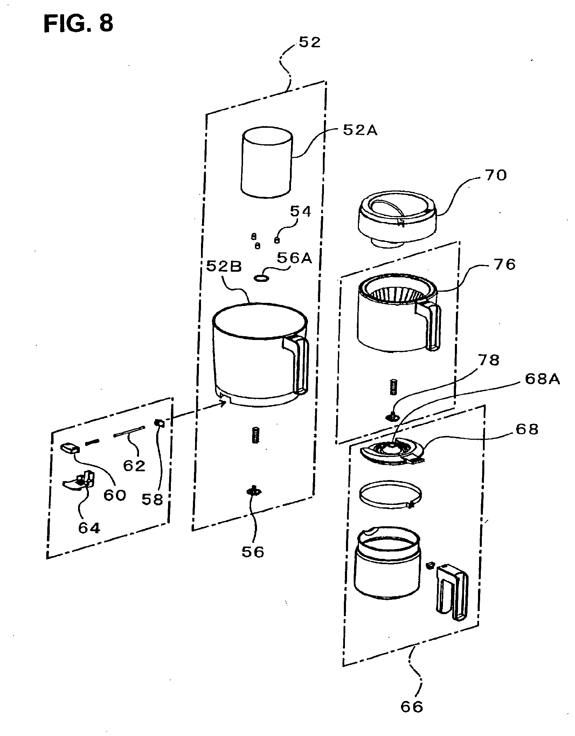

The cooling unit 52 is comprised so that a coffee liquid receptacle (coffee liquid collector unit, extract liquid collector unit) 52A shaped as a bottomed cylinder and an ice water reservoir (cooling liquid reservoir) 52B are combined concentrically. The coffee liquid receptacle 52A is made of a metal of good thermal conductivity such as aluminum. The bottom of the coffee liquid receptacle 52A is secured by spacers 54 (see Figures 1 and 8) on the ice water reservoir 52B at three places, so that the coffee liquid receptacle 52A is elevated (floated) from the ice water reservoir 52B. As a result, the ice water contacts the bottom surface of the coffee liquid receptacle 52A, enhancing the coffee liquid cooling effect. In the ice water reservoir 52B, moreover, instead of ice water, another cooling liquid (a gelatinous fluid, for example) can be placed.

The center part of the bottom of the coffee liquid receptacle 52A sinks downward and adheres tightly to the ice water reservoir 52B, and a discharge valve 56 passes through the tightly adhering center part. To this discharge valve 56 is applied a downward-oriented return tendency, and the upper end of the discharge valve 56 normally closes the discharge hole in the coffee liquid receptacle 52A by a seal ring 56A (see Figures 1 and 8). The lower end of this discharge valve 56 is formed in a substantially inverted umbrella shape. When this inverted umbrella-shaped part is pushed up from the side by a valve opening/closing piece 58 capable of sliding in the horizontal direction (see Figures 8 and 9), the discharge valve 56 is thereby opened, allowing the coffee liquid to be discharged downward.

As seen from Figures 5 and 6, the valve opening/closing piece 58 is connected by a rod 62 to an operating piece (open/close button) 60 which is located near the outer circumference of the bottom of the ice water reservoir 52B, and it is mounted to the bottom of the ice water reservoir 52B by a cover 64. The operating piece 60, rod 62, and valve opening/closing piece 58 are imparted with a tendency to return to the outside (direction that closes the discharge valve 56) by a coil spring.

The cooling unit 52 is placed on the partition member 14 with the hot water receptacle 30 set on the iced coffee extraction funnel 50, with the stirring vanes 50A of the iced coffee extraction funnel 50 inserted in the coffee liquid receptacle 52A from above, and with the stirring rods 50B inserted in the ice water reservoir 52B from above, so that the whole of these elements are on the partition member 14. As seen from Figure 9, three or more of the stirring rods 50B are provided on the iced coffee extraction funnel 50 so as to extend downward, and these stirring rods 50B extend into the inside of the ice water reservoir 52B (the cooling liquid reservoir), so that the lower ends of these stirring rods 50B are positioned below the lower ends of the stirring vanes 50A that extend into the inside of the coffee liquid receptacle 52A (the extract liquid collector unit). When the cooling unit 52 is placed on the partition member 14c, the circular seat 52C (see Figure 1) provided at the bottom of the ice water reservoir 52B is engaged with a circular hole 14A provided in the partition member 14; as a result, the cooling unit 52 is positionally stabilized. The reference numeral 52D is a handle of the ice water reservoir 52B.

A jug 66, which is a container for receiving beverage liquid (hot coffee liquid or iced coffee liquid) is mounted below the cooling unit 52 as shown in Figure 1. This jug 66 is placed on the round plate 32B of the heater 32 (see Figure 5) attached to the opening 12A in the base housing 12, with a thermally insulating mat in between. The cover (or cover plate) 68 for the jug 66A is formed with a convexity 68A (see Figure 4) which is erected in the center of the cover 68, and a plurality of drip holes are formed in a ring-shaped channel surrounding the convexity 68A. As a result, if the operating piece 60 of the cooling unit 52 is pushed from the side to open the discharge valve 56, iced coffee liquid in the coffee liquid receptacle 52A flows down into the jug 66. Reference numeral 66A (see Figure 1) is a handle attached to the jug 66. The convexity 68A of the cover 68 shown in Figure 4 is for pushing up and opening the discharge valve 78 for a hot coffee extraction funnel 76 in the hot coffee extraction mode that will be described later.

In this condition, that is, in the iced coffee extraction mode, the hot water receptacle 30 is attached to the iced coffee extraction funnel 50, the stirring vanes 50A and stirring rods 50B are inserted, respectively, into the coffee liquid receptacle 52A and ice water reservoir 52B of the cooling unit 52, and the whole of these parts is placed on the partition member 14. Then, the hot water receptacle 30 and funnel 50, which form a single unit, are pulled up, allowing the hub unit 30A of the hot water receptacle 30 to be locked to the drive shaft 24 by the chuck 26. As a result, when the motor 22 is started, the hot water receptacle 30 and iced coffee extraction funnel 50 are rotated as a unit together with the drive shaft 24.

When a paper filter and coffee powder (neither shown in the drawings) are set beforehand in the funnel 50, and the heater 32 is caused to heat and hot water is introduced from the filter 40, then the hot water is dispersed by the hot water receptacle 30 and dripped into the funnel 50; and the extracted coffee liquid is accumulated in the coffee liquid receptacle 52A of the cooling unit 52. Ice water has been placed in the ice water reservoir 52B beforehand; accordingly, the extracted coffee liquid is quickly chilled in the coffee liquid receptacle 52A. At that time, both the stirring vanes 50A and the stirring rods 50B are rotated together with the funnel 50, thus stirring the coffee liquid and ice water; accordingly, the coffee liquid cooling effect is significantly great.

When coffee extraction finishes, and the coffee liquid accumulated in the coffee liquid receptacle 52A of the cooling unit 52 has been sufficiently cooled by the ice water, the motor 22 is stopped. When next the operating piece 60 of the discharge valve 56 is pushed from the side to open the discharge valve 56, chilled coffee liquid flows down into the jug 66. Then, the jug 66 is removed from the base housing 12, and the iced coffee therein is poured in a cup.

Next, the hot coffee extraction mode will be described, referring primarily to Figures 4, 5, 8, and 11.

In this hot coffee extraction mode, the scatter 70 is attached to the hot water receptacle 30. In other words, the scatter 70 is attached in place of the iced coffee extraction funnel 50 used in the above-described iced coffee extraction mode. Thus, the hot water receptacle 30 connects the iced coffee extraction funnel 50 to the drive shaft 24 of the reduced-speed motor 22, and it also connects, instead, the scatter 70 to the drive shaft 24 of the reduced-speed motor 22; accordingly, the hot water receptacle 30 is called a connecting member in the present invention. In this scatter 70 are formed a deep concavity 72 at a position including the rotational center axis (centerline) A (see Figure 11) of the drive shaft 24 (see Figures 9 and 10) (through which the center axis A passing), and a shallow concavity 74 not at a position including the rotational center axis A (through which the center axis A not passing). The bottoms of the two concavities 72 and 74 are continuous in a substantially stair shape as shown in Figure 11.

In the bottom of each of the concavities, a drip hole 72A and 74A, respectively, is formed. The positions R1 and R2 in the radial direction of the drip holes 72A and 74A relative to the rotational center axis A are set so that R1 < R2, and the hole diameter a of the drip hole 72A is smaller than the hole diameter b of the drip hole 74A (a < b).

The radial position R1 of the drip hole 72A is set so that, when coffee powder mainly for a small number of people (one or two people) is put in the funnel 76 described later, the hot water drips along the circle of comparatively narrow radius in the vicinity of the center. On the other hand, the radial position R2 of the drip hole 74A is set so that, when coffee powder for a medium or large number of people is put in the funnel 76, the hot water not only strikes coffee powder positioned near the center but also strikes coffee powder positioned apart from the center. The hole diameters a and b of the drip holes 72A and 74A are set so as to optimize the distribution of the hot water dripping from the drip holes 72 and 74, taking into consideration the differences in the depths from the liquid surface of the hot water accumulated in the scatter 70 (i.e. from the hot water surface).

The reference numeral 76 denotes a hot coffee extraction funnel. This funnel 76 can be locked in the hole 14A of the partition member 14. The locking structure is made, for example, so that an engagement projection provided on the funnel 76 is engaged in a hook-shaped channel formed in the inner circumferential surface of the hole 14A, and the funnel 76 is rotated slightly in the horizontal direction to lock the funnel 76. In the bottom of this funnel 76 is provided a discharge valve 78. The discharge valve 78 has a structure similar to that of the discharge valve 56 of the cooling unit 52 described above.

The discharge valve 78 has a tendency to return downward, and, while a seal ring attached to its upper end closes the discharge hole of the funnel 76, the lower end of the discharge valve 78 is formed in a substantially inverted umbrella shape. The discharge valve 78 opens the discharge hole when its inverted umbrella-shaped part is pushed up from below. When the jug 66 is set below the partition member 14 (on the base housing 12), the convexity 68A of the cover 68 of the jug 66 makes contact from below with the lower end of the discharge valve 78; and, due to the inclined surface of the convexity 68A, the cover 68 is pushed up and opens the discharge hole of the funnel 76 automatically. Hot coffee extraction is conducted with the jug 66 set in this condition. At this time, the funnel 76 is locked to the partition member 14, and thus the funnel 76 is pushed up by the jug 66 and will not ever float.

In the above-described hot coffee extraction mode, a paper filter and coffee powder are first set in the funnel 76, and the funnel 76 is next secured (locked) to the partition member 14. Then, when the heater 32 is made to emit heat, and boiling water is poured into the hot water receptacle 30, hot water enters the scatter 70. The hot water first enters the deep concavity 72, and drips from the drip hole 72A in the vicinity of the center of the funnel 76. Since the scatter 70 is rotated together with the drive shaft 24, dripping occurs on a small circle in the vicinity of the center of the funnel 76.

The volume of hot water flowing into the funnel 76 from the hot water receptacle 30 is set so that it is greater than the volume of drip from the drip hole 72A, so that the liquid surface (hot water surface) in the deep concavity 72 rises. When the liquid surface of the hot water rises and spreads to the shallow concavity 74, hot water begins to drip also from the drip hole 74A; and when the liquid surface rises further, hot water is dripped from both of the drip holes 72A and 74A.

As described above, the radial position R2 of the drip hole 74A is greater than the radial position R1 of the drip hole 72A. Accordingly, the hot water dripping from the drip hole 74A drips on a circle that is distant from the center of the funnel 76. As a result, hot water can be suitably dispersed and dripped onto the coffee powder inside the funnel 76. In this manner, it is possible to at first pour most of the hot water in the vicinity of the center of the funnel 76, and then, after the coffee powder has been suitably steamed, to have the hot water poured also nearer to the outer circumference and create optimal extraction conditions. It is thus possible to extract hot coffee which is highly fragrant and has good taste.

Furthermore, since there is a gap between the funnel 76 and the scatter 70 (see Figure 4), the operator is able to view the inside of the funnel 76 from this gap. In other words, the condition wherein foam is generated inside the funnel 76 can be verified. As a result, pleasure increases when extracting coffee.

Next, a control section 80 will be described with reference to Figures 5 and 9.

The control section 80 controls the heater 32 and the motor 22 based on the beverage type, hot or ice, and on the number of portions (number of cups) to be extracted, which are set by the input means 82. The input means 82 have switches 82A and 82B for inputting either hot (H) or ice (I), and a switch 82C for inputting how many cups (extraction quantity). The control section 80 determines hot or ice based on an ON input from either switch 82A or switch 82B, and it determines how many cups (extraction quantity) by the number of turning-on of the switch 82C.

The control section 80 controls the volume of hot water poured in by changing the heating time with the heater 32 according to the extraction quantity. When heating for a time To for one person, for example, the heating time is made 2T₀ in case for two persons, and 3T₀ if it is for three persons. The control section may change the flow-out volume in response to the type, whether hot or ice. When it is desired to extract strong coffee for iced coffee, for example, then the flow-out volume is made less, so that the heating time is set shorter than when extracting hot coffee.

It can be set so that the control section 80 changes the hot water flow-out speed for hot or iced coffee. For iced coffee, for example, the flow-out speed is made slower in order to extract strongly. As a result, the temperature of the heater 32 is set lower than when extracting hot coffee. A temperature sensor 84 for detecting the heater temperature can be provided as shown in Figures 4 and 9, for example, so that the control section 80 performs feedback control in response to the heater temperature.

In the embodiment described above, selection can be made for a hot coffee extraction mode and an iced coffee extraction mode, but a part of the configuration used in this embodiment is applicable to a coffee maker so that it used exclusively in one of two modes. Using the scatter 70 attached to the drive shaft 24 at the top of the main body unit (in a manner that it is either detachable or undetachable), a coffee maker for extracting only hot coffee or a coffee maker for extracting only iced coffee can be made. In the latter case in which the coffee maker uses a scatter, an iced coffee extraction funnel is held in the main body unit; and as in the case of extracting hot coffee, hot water can be dispersed over the entire funnel, and it is possible to visually verify the situation inside the funnel during extraction.

The bottom of the scatter can be made in a conical shape so that the scatter is deep in the vicinity of the center, and it can also be made in a multi-step stair shape (including two steps or two or more steps) so that the scatter is deep in the vicinity of the center and it becomes shallower in steps toward the vicinity of the periphery. Either one or a plurality of drip holes is provided at positions thereof depth in the scatter.

When the scatter bottom is made in a stair shape, the liquid surface of the hot water will change (become lower) continuously, and the height of the drip holes provided in steps will change non-continuously, so that it is easy to adjust the relationship between the volume of hot water and the number of drip holes (for dripping hot water) used. Adjustment can be made, for example, so that only drip holes at deep positions in the vicinity of the center are used when extracting for one person, preventing hot water from dripping in the region where there is no coffee powder at the funnel periphery, or so that the hot water is dispersed and made to drip over a wide range out to the vicinity of the funnel periphery when extracting portions for many people.

The structure, in which steps 42B and 44B are formed, respectively, separately by a certain measure in the vertical direction in the water reservoir 42 and the water reservoir mounting chamber 44, is applicable to a dedicated coffee maker for extracting either hot coffee only or iced coffee only, with the above-described advantages.

Also, the above configuration for the water reservoir 42 and water reservoir mounting chamber 44 is applicable to water reservoirs or liquid reservoirs or the like used in small electric products other than coffee makers, such, for example, as interior humidifiers, or humidifiers provided in cosmetic equipment or heating equipment.

The configuration for controlling the hot water extraction volume according to the heating time with the heater 32 can also be applied to dedicated coffee makers for hot coffee or iced coffee. In such cases, the heater heating time can be monitored with a timer, and the structure will not become complex because the control section 80, formed by a microcomputer, already includes a timer.

Furthermore, the stirring vanes 50A and stirring rods 50B attached to the iced coffee extraction funnel are applicable to a dedicated coffee maker for iced coffee. As described in the foregoing, the configurations of the above-described embodiment are applicable to dedicated iced coffee makers and not only to coffee makers for both hot and iced coffee.

### Second embodiment

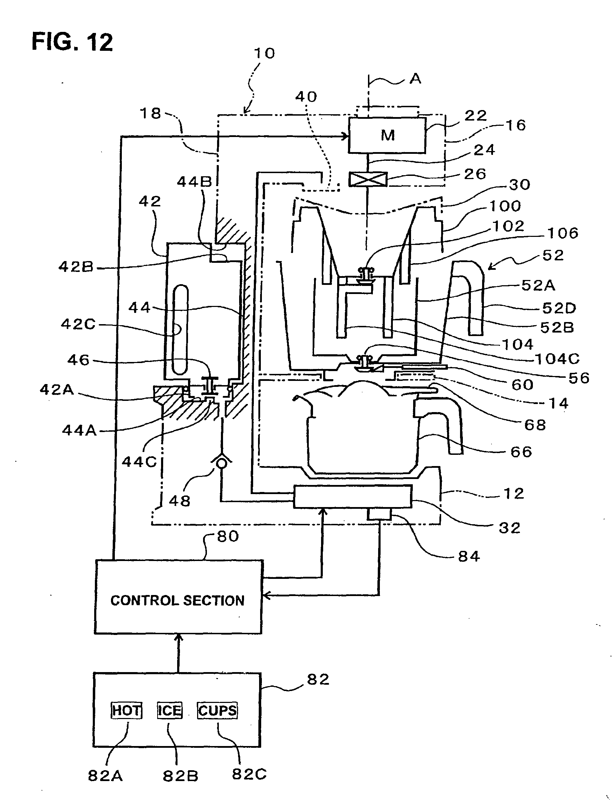

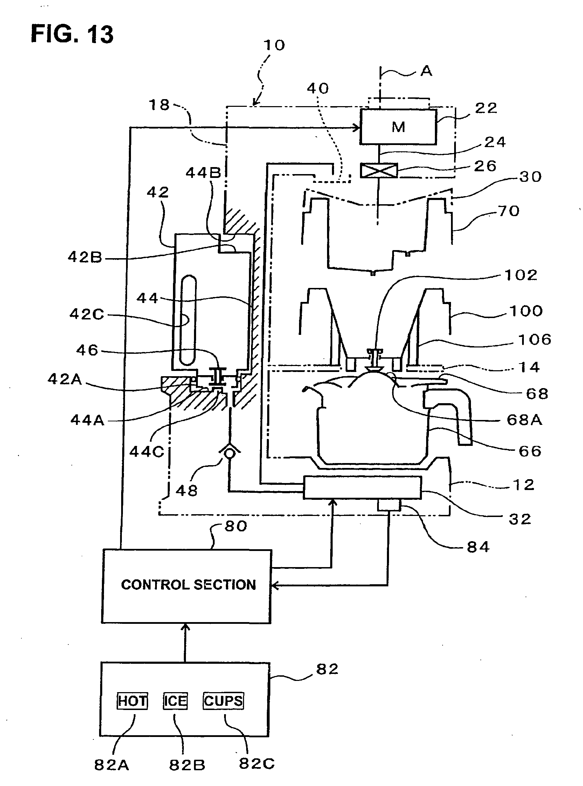

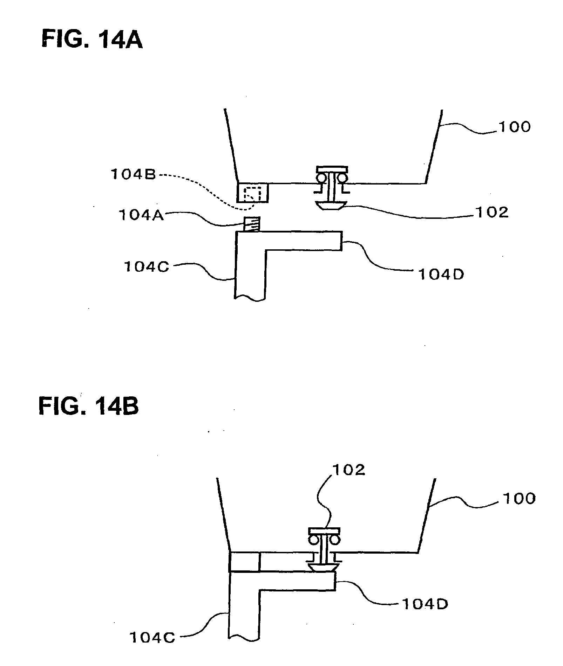

Figure 12 is a side view of the coffee maker in the ice beverage extraction mode in another embodiment of the present invention, Figure 13 is side view in the hot beverage extraction mode, and Figure 14A and 14B are cross-sectional side views of the stirring vane attachment structure used in the second embodiment.

In this second embodiment, the ice beverage extraction funnel and the hot beverage extraction funnel are made to do double duty. In other words, the ice beverage extraction funnel can be used as the hot beverage extraction funnel, and vice versa. In Figures 12 and 13, the same reference numerals are used for the parts that are the same as in the first embodiment of Figures 1 to 11, and descriptions thereof are omitted.

The joint-use ice/hot funnel 100 used in this second embodiment has a discharge valve 102 in the center of the bottom. The discharge valve 102 is urged in a downward opening direction and is opened by pushing the lower end upward. An appropriate number of stirring vanes 104 are detachably attached to the bottom of the funnel 100. For example, as seen from Figure 14, a screw 104A formed at the upper end of the stirring vane 104 is screwed into a screw hole 104B formed in the bottom of the funnel 100. In one stirring vane 104C of the stirring vanes 104, as shown in Figure 14B, a projection 104D that protrudes in the radial direction from the upper end thereof is formed. When this stirring vane 104C is attached to the funnel 100, the projection 104D pushes the discharge valve 102 upward, and the discharge valve 102 opens. When the stirring vane 104C is taken from the funnel 100, the discharge valve 102 drops and closes (Figure 14(A)).

In the ice beverage extraction mode, the stirring vanes 104 are mounted in the funnel 100, and the discharge valve 102 is opened (Figure 12). Under this condition, by way of setting the funnel 100 as shown in Figure 12, the stirring vanes 104 will advance from above into the extract liquid receptacle 52A. As a result, the hot extract liquid that drips through the discharge valve 102 from the funnel 100 is collected in the extract liquid receptacle 52A. This extract liquid is stirred by the (rotating) stirring vanes 104 and the cooling thereof promoted.

On the other hand, in the hot beverage extraction mode, as shown in Figure 13, all of the stirring vanes 104 are removed and placed on the partition member 14. At that time, a plurality of legs 106 provided in the funnel 100 come into contact with the partition member 14 and the height of the funnel 100 is kept at that height level. The length of the legs 106 is set so that, when the jug 66 is placed on the base housing of the main body unit 10 of the coffee maker, the convexity 68A provided in the cover 68 of the jug 66 will open the discharge valve 102.

As seen from the above, in the hot beverage extraction mode of Figure 13, hot water will drip into the funnel 100 from the scatter 70, and the extract liquid extracted in that funnel 100 will flow from the discharge valve 102 into the jug 66.

### Third embodiment

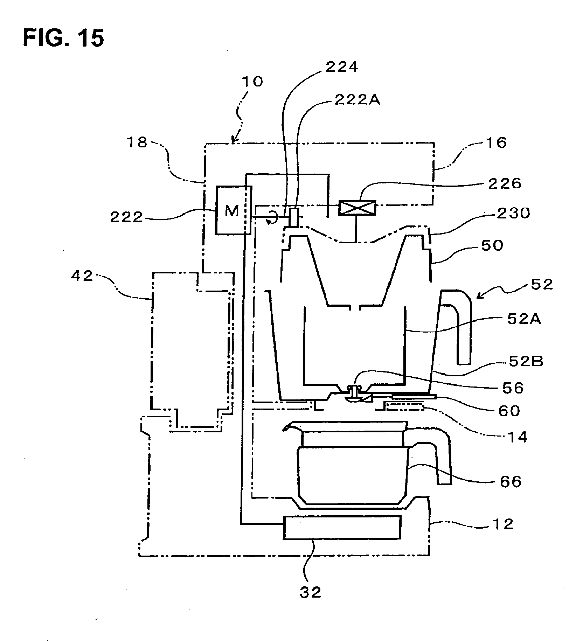

Figure 15 is a cross-sectional side view of the coffee maker of still another embodiment of the present invention.

In this third embodiment, the rotational drive mechanism for the hot water receptacle 30 differs from that in the above-described first and second embodiments. More specifically, while a hot water receptacle 230 is held so that it can rotate freely by a chuck 226, a horizontal drive shaft 224 is turned by a motor 222 functioning as the rotational drive unit, and a drive roller 222A secured to the drive shaft 224 is made to roll against the upper surface of the hot water receptacle 230, in the vicinity of the outer circumference thereof.

The chuck 226 suspends the hot water receptacle 230 so that it can freely rotate about the vertical rotational center axis, and the hot water receptacle 230 is detachably attached to the chuck 226.

Figure 15 shows the ice beverage extraction mode, wherein the same reference numerals are used for the parts that are the same as in the first and second embodiments shown in Figures 1 to 14, and descriptions thereof are omitted. In Figure 15 as well, the configuration can be changed to the hot beverage extraction mode, wherein the scatter is attached to the hot water receptacle 230 as shown in Figure and 13, and the hot beverage extraction funnel is merely set on the partition member 14 instead of the cooling unit 52.

## Claims

1. A beverage maker in which switching is possible between a hot beverage extraction mode and an ice beverage extraction mode for cooling a hot extract liquid with a cooling liquid, comprising:
a main body unit provided in an upper part thereof with a hot water pour-out port;
a scatter and an ice beverage extraction funnel selectively held in said main body unit;
a rotational drive unit provided in said main body unit, said rotational drive unit rotationally driving said scatter or said ice beverage extraction funnel, which are selectively held in said main body unit, about a vertical rotational center axis;
a hot beverage extraction funnel held in said main body unit in the hot beverage extraction mode, said hot beverage extraction funnel receiving hot water which is received, from said hot water pour-out port, dispersed, and dripped by said scatter;
a cooling liquid reservoir held in said main body unit in the ice beverage extraction mode, said cooling liquid reservoir cooling an extract liquid collector unit, which is for receiving hot extract liquid below said ice beverage extraction funnel, and the extract liquid in said extract liquid collector unit; and
a stirring member that extends into at least one of said extract liquid collector unit and said cooling liquid reservoir and is driven by said rotational drive unit;
wherein:
in the hot beverage extraction mode, hot extract liquid is received by a vessel from said hot beverage extraction funnel, and
in the ice beverage extraction mode, ice beverage liquid cooled by said cooling liquid reservoir is transferred to a vessel from said extract liquid collector unit.

2. The beverage maker according to claim 1, wherein
said scatter and said ice beverage extraction funnel are selectively secured to a vertical drive shaft provided in said main body unit, and
said drive shaft is rotationally driven by said rotational drive unit provided in said main body unit.

3. The beverage maker according to claim 2, wherein said scatter and said ice beverage extraction funnel are selectively secured to said drive shaft by a common connecting member.

4. The beverage maker according to claim 3, wherein said connecting member is a hot water receptacle for dripping hot water received from said hot water pour-out port into said scatter or said ice beverage extraction funnel connected to said connecting member.

5. The beverage maker according to claim 4, said hot water receptacle is provided with a hot water drip hole at a position offset from the rotational center axis.

6. The beverage maker according to claim 5, wherein said hot water receptacle is substantially shaped as an inverted umbrella and is provided with a plurality of hot water drip holes at positions at differing distances from the rotational center axis.

7. The beverage maker according to claim 1, wherein said extract liquid collector unit and said cooling liquid reservoir are integrated to form a cooling unit, and the cooling liquid in said cooling liquid reservoir contacts an outer circumference of said extract liquid collector unit.

8. The beverage maker according to claim 7, wherein
said extract liquid collector unit of the cooling unit is a bottomed cylinder involving the rotational center axis,
said cooling liquid reservoir is a circular cylinder, surrounding said extract liquid receptacle, and
said ice beverage extraction funnel is provided with a stirring member extending into at least one of said extract liquid collector unit and said cooling liquid reservoir.

9. The beverage maker according to claim 1, wherein
said scatter is provided with drip holes formed in a plurality of positions of differing depths, and
drip holes at deeper positions are located nearer to the rotational center axis than are drip holes at shallower positions.

10. The beverage maker according to claim 9, wherein
said scatter is provided with a deeper concavity near the rotational center axis and a shallower concavity apart from said rotational center axis,
bottoms of said concavities are formed to be substantially stair shaped, and
hot water drip holes formed in a bottom of the deeper concavity are located closer to the rotational center axis than are hot water drip holes formed in a bottom of said shallower concavity.

11. The beverage maker according to claim 9 or 10, wherein a diameter of the drip holes provided in deeper positions is smaller than a diameter of the drip holes provided in shallower positions.

12. The beverage maker according to claim 8, wherein
said ice beverage extraction funnel is provided with stirring members extending into said extract liquid collector unit and inside of said cooling liquid reservoir, and
three or more of said stirring members extend into said cooling liquid reservoir number, and lower ends of said three or more of said stirring members are positioned below lower ends of stirring member extending into said extract liquid collector unit.

13. The beverage maker according to claim 12, wherein
said hot beverage extraction funnel is provided in a bottom thereof with a hot beverage discharge valve capable of opening from below, and
a cover plate of said vessel for receiving beverage liquid is provided with a convexity for opening said discharge valve when said vessel is placed on a bottom part of said main body unit.

14. The beverage maker according to claim 7, wherein
said cooling unit is provided with an ice beverage discharge valve in a bottom of said extract liquid collector unit, and
said discharge valve can be opened by an operating piece that protrudes to an outside in a radial direction from an outer circumference of said cooling unit.

15. The beverage maker according to claim 13, wherein said hot beverage extraction funnel can be locked in said main body unit.

16. The beverage maker according to claim 1, further comprising
an electric heater for heating water supplied from a water reservoir and conducting heated water to said hot water pour-out port;
a control section for controlling a temperature and heating time for said electric heater; and
an input means for inputting information on extraction process volumes to said control section;
wherein said control section controls a hot water pour-out volume by changing heating time for the extraction process volume.

17. The beverage maker according to claim 16, wherein a bottom part, a partition member, and a top housing of said main body unit are integrally joined by an upright part that is long in a longitudinal direction, and one water reservoir is provided in said upright part.

18. The beverage maker according to claim 17, wherein said control section sets a heater heating temperature setting in the hot beverage extraction mode higher than a heater heating temperature setting in the ice beverage extraction mode.

19. The beverage maker according to claim 17, wherein
a water reservoir loading chamber on said main body unit is formed with a concavity in a lower part thereof, said concavity holding said water reservoir with a lower part of said water reservoir engaging substantially vertically from above with the concavity; and
said water reservoir and said water reservoir loading chamber are provided with steps that com into contact with each other when said water reservoir is moved upward to limiting an amount of vertical upward movement of said water reservoir within a predetermined range, so that said water reservoir is removed by tilting an upper part thereof toward an outside from a position where said water reservoir and water reservoir loading chamber com into contact.

20. The beverage maker according to claim 1, wherein said ice beverage extraction funnel is used as said hot beverage extraction funnel.

21. The beverage maker according to claim 20, wherein
said ice beverage extraction funnel that can be used as said hot beverage extraction funnel is provided with an extract liquid discharge valve;
stirring members are provided in a detachable manner in said ice beverage extraction funnel; and
said discharge valve is opened when said stirring members are mounted on said ice beverage extraction funnel.
